# NEUE EUROPÄISCHE PATENTSCHRIFT

(11) **EP 0 599 173 B2**
(45) Veröffentlichungstag und Bekanntmachung des Hinweises auf die Entscheidung über den Einspruch: **13.11.2002**
(45) Hinweis auf die Patenterteilung: 04.02.1998
(21) Anmeldenummer: 93118440.2
(22) Anmeldetag: 15.11.1993
(51) Int. Cl.: F16K 47/08, F16K 3/03, F02M 19/08, G05D 7/01

(54) **Vorrichtung zum Einstellen einer vorgegebenen Gasmenge**
Device for adjusting a predetermined gas flow
Dispositif pour la commande d'un débit de gaz prédéterminé

(30) Priorität: 21.11.1992 DE 4239241
(43) Veröffentlichungstag der Anmeldung: 01.06.1994
(73) Patentinhaber: ZEPPELIN SCHÜTTGUTTECHNIK GmbH, D-88250 Weingarten (DE)
(72) Erfinder: Krambrock, Wolfgang, D-88267 Vogt (DE)
(74) Vertreter: Patentanwälte Eisele, Otten, Roth & Dobler

(56) Entgegenhaltungen:
- WO-A-91/03781
- AU-B- 499 669
- CH-A- 638 024
- DE-A- 3 012 630
- DE-A- 3 209 378
- DE-C- 408 336
- DE-U- 1 890 042
- DE-U- 1 987 447
- GB-A- 1 003 462
- US-A- 2 918 933
- US-A- 4 092 999
- PATENT ABSTRACTS OF JAPAN vol. 11, no. 291 (P-618) 19. September 1987 & JP-A-62 085 307 (MARCON ELECTRONICS CO LTD) 18. April 1987
- PATENT ABSTRACTS OF JAPAN vol. 8, no. 28 (M-274) (1465) 7. Februar 1984 & JP-A-58 185 964 (NIHON KIKAKI SEISAKUSHO K.K.) 29. Oktober 1983
- SOVIET PATENTS ABSTRACTS Section PQ, Week 9218, 17. Juni 1992 Derwent Publications Ltd., London, GB; Class Q66, AN 92-149007 & SU-A-1 665 151 (FEDORETS N V) 23. Juli 1991
- SOVIET PATENTS ABSTRACTS Section PQ, Week 9103, 6. März 1991 Derwent Publications Ltd., London, GB; Class Q66, AN 91-020082 & SU-A-1 562 574 (GULKO V I) 7. Mai 1990
- Prof. W. Siegel, Pneumatische Forderung - Grundlagen, AUslegung, Anlagenbau, Betrieb - Vogel Verlag und Druck KG, Würzburg, 1991, S. 177-185
- L. Prandtl et al., Führer durch die Strömungslehre, Griedr. Vieweg & Sohn Verlagsgesellschaft mbH, Braunschweig/Wiesbaden, 1990, S. 597-609

## Beschreibung

Die Erfindung betrifft eine Vorrichtung zum Einstellen einer vorgegebenen Gasmenge nach dem Oberbegriff des Anspruchs 1.

Bekanntlich bestehen derartige Regeleinrichtungen im einfachsten Fall aus einer sogenannten Lavaldüse, die zweckmäßigerweise axial symmetrisch aus einem konvex zusammenlaufenden düsenförmigen Teil und einer anschließenden konkaven Erweiterung besteht. Derartige Lavaldüsen liefern einen konstanten Gasmassenstrom solange das Verhältnis des Druckes im engsten Teil der Düse zu dem in Strömungsrichtung gesehenen Druck vor der Lavaldüse den Wert von 0,53 (bei zweiatomigen Gasen) nicht überschreitet. Durch den Druckgewinn im erweiterten Teil der Düse ist es möglich, die Luftmenge bei konstantem Vordruck solange konstant zu halten, wie das Verhältnis des am Ende der Erweiterung herrschenden Druckes zum Vordruck der Lavaldüse einen Wert von rd. 0,85 bis 0,9 nicht überschreitet.

Derartige bekannte Lavaldüsen haben den Nachteil, daß der durch sie strömende Gasmassenstrom nur über den Vordruck der Düse variiert werden kann. Bei einem weiten Bereich der zu variierenden Gasmenge müssen häufig mehrere Lavaldüsen parallel geschaltet werden, die wahlweise oder in Kombination miteinander den erforderlichen Gasmassenstrom liefern.

Aus den Literaturstellen DE-A-32 09 378 sowie Patent Abstracts of Japan, vol. 8, no. 28, (M-274)(1465) und JP-A-58 185 964 sind Vorrichtungen zur Regelung eines Brennstoff-Luftgemisches bekannt geworden, bei welchen in ihren Abstand verstellbare Düsenhälften verwendet werden. Einen ähnlichen Sachverhalt zeigt die GB-A-889,337. Aus diesen Druckschriften ist zwar die Verstellbarkeit von Düsensegmenten bekannt. Sie geben jedoch keine Anregung dafür, wie mit derartigen verstellbaren Düsenteilsegmenten eine pneumatische Förderung von Schüttgütern erfolgen kann.

Der Erfindung liegt demzufolge die Aufgabe zugrunde, eine lavaldüsenähnliche Vorrichtung zu schaffen, die zur pneumatischen Förderung von Schüttgütern dient und bei der die strömende Gasmenge bei konstantem Düsenvordruck in Abhängigkeit des Düsenausgangsdruckes variiert werden kann.

Diese Aufgabe wird ausgehend von einer Vorrichtung nach dem Oberbegriff des Anspruchs 1 durch die kennzeichnenden Merkmale des Anspruchs 1 gelöst.

In den Unteransprüchen sind vorteilhafte und zweckmäßige Weiterbildungen der im Anspruch 1 angegebenen Vorrichtung enthalten.

Der Erfindung liegt der Kerngedanke zugrunde, eine lavaldüsenähnliche Vorrichtung zu schaffen, deren Düsenquerschnitt oder Düsengeometrie während des Betriebs variabel einstellbar ist. Dies geschieht in einer besonderen Ausführungsform der Erfindung zum Beispiel dadurch, daß eine längsgeschnittene Düse zwischen zwei seitlichen, ebenen Wänden auseinandergezogen wird. Insbesondere kann im Längsschnitt durch eine derartige Vorrichtung die Düsenquerschnittsform beibehalten bleiben.

Aus der US-PS 2,918,933 ist zwar eine sich im Querschnitt verändernde Düse zur Herstellung eines konstanten Volumenstroms bekannt geworden. Hier handelt es sich jedoch um ein gewöhnliches Drosselventil, dessen Querschnitt an der engsten Stelle des Durchgangs durch einen als Blende wirkenden Schieber variiert werden kann. Demgegenüber ist es bei der vorliegenden Erfindung maßgeblich, daß der gesamte Düsenquerschnitt einschließlich des Einlauf- und Auslaufdiffusors in seiner Form während des Verstellvorganges erhalten bleibt.

Auch die US-PS 4,092,999 zeigt keinen vergleichbaren Sachverhalt. Bei dieser Druckschrift sollen zwei Blechstreifen, die an einem Kolben befestigt sind, durch einen axialen Druck so verformt werden, daß sich der engste Querschnitt der Düse verändert, ohne daß es jedoch zu einer Verstellung im erweiterten Teil der Düse kommt. Die vorliegende Erfindung unterscheidet sich demzufolge auch grundlegend von diesem Stand der Technik.

In Weiterbildung der Erfindung kann die im Querschnitt kegelförmige Ausbildung einer aus Teilbereichen zusammengesetzten Düse in ihrer Ausgangsstellung beibehalten werden, wobei beim Auseinanderziehen von mehreren Teilsegmenten der Düse tangentiale Wandungsabschnitte vorgesehen sind, die ebene Seitenwände im Düsenkörper bilden. Hierdurch wirkt die Düse wie eine Fotolinse, bei welcher die Blendenteile tangential überlappend radial auseinanderziehbar sind.

Es können auch andere Formgebungen der lavaldüsen-ähnlichen Vorrichtung gewählt werden. Anstelle von zwei seitlichen, ebenen Wänden zwischen denen ein lavaldüsenförmiger Querschnitt gegeneinander verschoben wird, können auch entsprechend düsenförmig angeordnete gegenüberliegende gerade Wandabschnitte mit einem entsprechend dazwischen vertahrbaren Stempel die Vorrichtung bilden.

In Weiterbildung der Erfindung kann der Bewegungsvorgang eines Düsenteils über eine einseitige Gelenkverbindung erfolgen, wobei die Bewegungsfreiheit der Düsenanordnung aufgrund des stationären Gelenkpunktes selbstverständlich eingeschränkt bleibt.

Die verschiedenen Düsenformen können in Teilbereichen als ebene Flächen ausgebildet sein. Sie können aber auch durch die Herstellung von Einzelsegmenten eine räumliche Struktur erhalten, wobei die parallel liegenden Einzelsegmente gesondert verfahrbar sind.

Wesentlich ist, daß die Querschnittsveränderung der Düse mittels einer Druckregeleinrichtung in Abhängigkeit des Düsenausgangsdruckes einstellbar ist.

Ein konstanter Düsenvordruck kann auf vorteilhafter Weise mittels eines Druckregelventils eingestellt werden.

Weitere Einzelheiten der Erfindung sind in den Zeichnungen dargestellt und unter Angabe weiterer Vorteile in der nachfolgenden Beschreibung näher erläutert.

Es zeigen
- Fig. 1a, 1b: einen Längsschnitt bzw. einen Querschnitt durch eine erste Ausführungsform für eine erfindungsgemäße Düse mit rechteckförmigem Querschnitt,
- Fig. 1c - 1f: eine Düsenform mit im zusammengefahrenen Zustand kreisförmigem Querschnitt,
- Fig. 2: eine Prinzip-Darstellung für die regeltechnische Anwendung der erfindungsgemäßen Düse,
- Fig. 3a - 3f: ein weiteres Ausführungsbeispiel mit räumlich gestalteter Düsenform in vier Segmenten und
- Fig. 4 - 7: verschiedene Ausführungsbeispiele in schematischer Darstellung für die Ausgestaltung der lavaldüsen-ähnlichen Düsenformen mit variabler Verstellbarkeit.

### Beschreibung von Ausführungsbeispielen:

Die erfindungsgemäße Düse ist als Lavaldüse oder lavaldüsenähnliche Düse 1 ausgebildet. Im nachfolgenden wird auch die lavaldüsen-ähnliche Form als "Lavaldüse" bezeichnet. Die "düsen-ähnliche Form" ergibt sich aus der nicht in jeder Stellung der variablen Düsenform bestehenden Idealform einer Lavaldüse.

Die vorliegende Erfindung sieht vor, den Querschnitt einer Lavaldüse während des Betriebes zu ändern. Hierbei wird bei den Ausführungsbeispielen nach den einzelnen Figuren ggf. in Kauf genommen, daß der ideale kegelförmige Querschnitt einer Lavaldüse nicht beibehalten werden kann, so daß eine lavaldüsen-ähnliche Form entsteht.

Gemäß der Darstellung in Fig. 1a, 1b ist eine solche lavaldüsen-ähnliche Düse 1 - im weiteren "Lavaldüse" genannt - in einem Gehäuse 5, bestehend aus zwei seitlichen Längsplatten 6, 7 angeordnet. Zwischen den Längsplatten 6, 7 befindet sich eine untere, stationäre Düsenhälfte 8 und eine auf und ab bewegbare Düsenhälfte 9, deren Abstand zueinander mittels einer Stelleinrichtung 10 variiert werden kann. In Fig. 1b ist der Schnitt A-A durch die engste Stelle 11 des Düsenquerschnitts in Fig. 1a dargestellt. Wie aus Fig. 1b ersichtlich, ist der Durchgangsquerschnitt 12 an der engsten Stelle 11 der beiden Düsenhälften 8, 9 als rechteckförmiger Querschnitt mit einer Höhe h₁ und einer Breite b₁ ausgebildet, d. h. der normale kreisförmige Querschnitt einer Lavaldüse wird vereinfacht ausgebildet. Die untere und obere Düsenhälfte 8, 9 weist im übrigen in der nach Fig. 1a dargestellten Blattebene einen Querschnitt auf, der einer Lavaldüse entspricht, d. h. einen vorderen, sich verjüngenden kegelförmigen Bereich 13, der nach der engsten Stelle 11 in einen hinteren, kegelförmigen Auslaufbereich 14 ausläuft. Die Wandungsabschnitte 13, 14 sind jedoch als ebene Wandungsabschnitte ausgebildet.

Die obere, verschiebbare Düsenhälfte 9 ist gegenüber der Rohrmittelachse 15 radial verschiebbar angeordnet, um den Abstand zwischen den Düsenhälften 8, 9 verstellen zu können. Dabei ist die obere Düsenhälfte 9 über Dichtungen 16 im Gehäuse 5 längsgeführt. Ein Zuganker 17 ist mit der oberen Düsenhälfte 9 verbunden und führt durch die Gehäusewandung zu der äußeren manuellen oder automatischen Stelleinrichtung 10.

Die rohrförmige Förderleitung 2 weist vor der Lavaldüse 1 einen Vordruck Pᵥ und nach der Lavaldüse 1 einen Ausgangsdruck Pₐ auf. Durch die Verschiebbarkeit der oberen Düsenhälfte 9 kann demzufolge der Gasmassenstrom Q bei gleichbleibendem Vordruck Pᵥ durch Vergrößerung des Abstandes zwischen den beiden Düsenhälften 8, 9 vergrößert und durch Verringerung des Abstandes zwischen den beiden Düsenhälften 8, 9 verkleinert werden. Hierdurch ist eine stufenlose Einstellbarkeit des Gasmassenstroms Q auch bei konstantem Vordruck Pᵥ möglich.

Gemäß der Darstellung der Erfindung in den Figuren 1a, 1b werden die beiden Längsplatten 6, 7 im oberen und im unteren Bereich durch eine obere Abdeckplatte 18 und eine untere Abdeckplatte 19 über jeweils eine Schraubverbindung 20 derart zueinander fixiert, daß die beiden Düsenhälften 8, 9 dazwischen gelagert sind. Dabei wird die untere Düsenhälfte 8 über eine Schraubverbindung 21 in einer entsprechenden Gehäuseaussparung 22 stationär gehalten. Ein kreisförmiger Befestigungsflansch 23 dient zur Befestigung des Gehäuses 5 in einer angepaßten rohrförmigen Förderleitung 2. Dieser Anschluß ist an den beiden seitlichen Enden in Fig. 1a angedeutet.

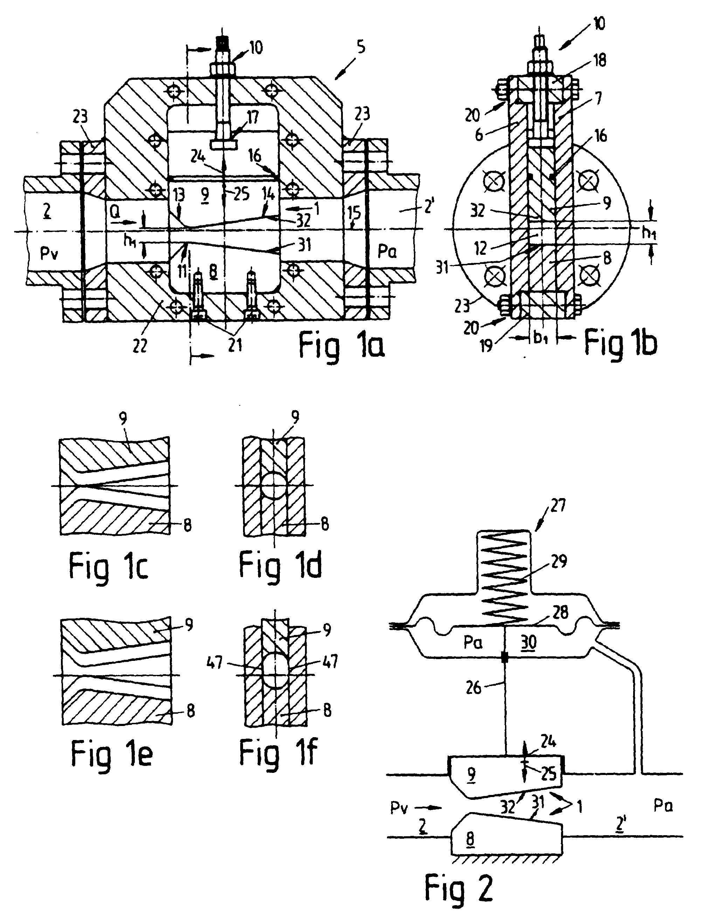

Beim Ausführungsbeispiel der Erfindung nach Fig. 1 a, 1b weisen die beiden Düsenhälften 8, 9 auch in ihrer engsten zusammengefahrenen Stellung einen nur lavaldüsen-ähnlichen Charakter auf, da die beiden Düsenhälften jeweils sich gegenüberstehende ebene Düsenwandungen 31, 32 aufweisen. Hieraus folgt ein quadratischer oder rechteckförmiger Durchgangsquerschnitt 12 im engsten Düsenquerschnitt (Fig. 1b). Gemäß der Darstellung in den Figuren 1c bis 1f kann dieser Wandungsquerschnitt 12' in der engsten zusammengefahrenen Stellung durchaus auch als rotationskegelförmiges Gebilde ausgeführt sein, um den Charakter bzw. den Aufbau einer echten Lavaldüse zu erhalten (Fig. 1c, 1d). Sobald man jedoch die obere und untere Düsenhälfte auseinanderzieht (Fig. 1e, 1f), entstehen zusätzliche ebene Seitenwandungsabschnitte 47, die die Düsenform von einem reinen Rotationskörper abweichen lassen.

In Fig. 2 ist das Prinzip der Lavaldüse 1 gemäß Fig. 1a, 1b nochmals dargestellt. Der unteren festen Düsenhälfte 8 steht die obere bewegliche Düsenhälfte 9 gegenüber, zur Bildung einer im Querschnitt zumindest lavaldüsen-ähnlichen Form. Die Auf- und Abbewegung der beweglichen Düsenhälfte 9 ist durch die Pfeile 24, 25 für die Auf- bzw. Abwärtsbewegung dargestellt.

Die Verbindung der oberen beweglichen Düsenhälfte 9 über eine symbolisch angedeutete Zugstange 26 führt zu einer Regeleinrichtung 27, die als beispielhaftes Regelorgan dargestellt ist. Diese Regeleinrichtung kann beispielsweise als Membranregelung ausgebildet sein, wobei eine bewegliche Membran 28 zwischen einer Druckfeder 29 und einem Druckraum 30 eingespannt ist. Der Druckraum 30 wird mit dem Ausgangsdruck Pₐ in der Förderleitung 2' hinter der Lavaldüse 1 beaufschlagt, so daß ein Druckabfall bzw. ein Druckaufbau des Druckes Pₐ hinter der Lavaldüse 1 eine Verschiebung der Membran 28 im Sinne einer Höhenverstellung der beweglichen Düsenhälfte 9 zur Folge hat. Beispielsweise kann ein Druckaufbau in einer hinsichtlich der Lavaldüse 1 strömungsabwärts liegenden Förderleitung 2' durch eine Stopfenbildung oder eine erhöhte Zuführung von zu förderndem Schüttgutmaterial erfolgen. Ein erhöhter Druck Pₐ hat ein Druckanstieg im Druckraum 30 zur Folge, so daß die Membran 28 und damit die obere Düsenhälfte 9 angehoben wird (Pfeilrichtung 24). In diesem Fall vergrößert sich der Durchgangsquerschnitt der Lavaldüse 1, was zu einem erhöhten Gasmassenstrom Q führt.

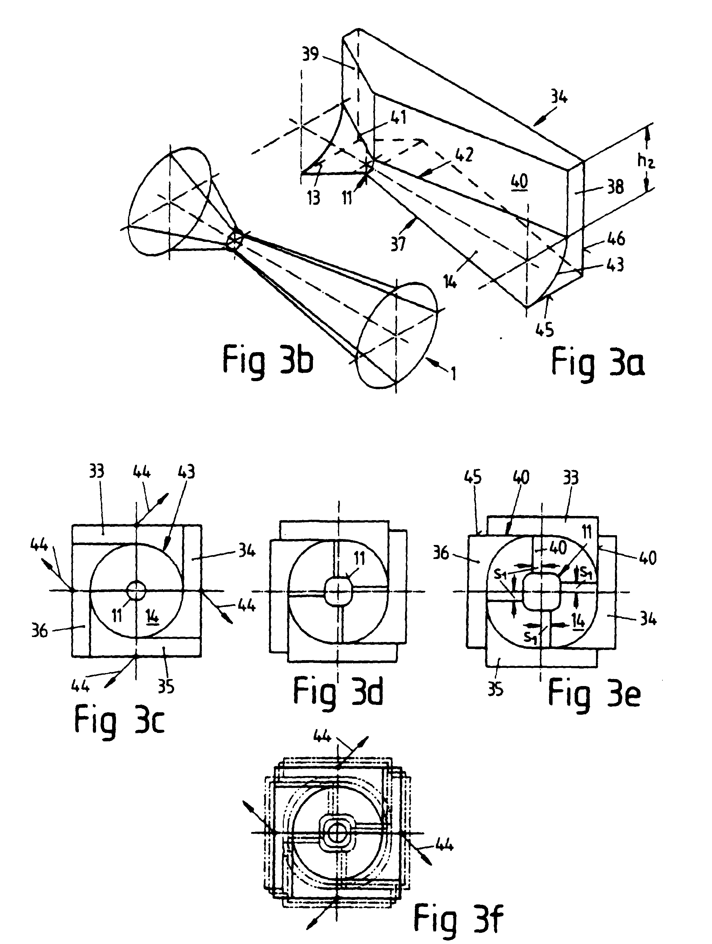

Im Ausführungsbeispiel der Erfindung nach Fig. 3 wird eine weitere, möglichst rotationssymmetrische Düsenform angestrebt. Dabei besteht die laval-ähnliche Düse 1 aus z. B. vier Teilsegmenten 33 bis 36, die jeweils zu einer Lavaldüse entsprechend den Darstellungen in Fig. 3c bis 3f zusammengefügt sind. Dabei besteht jedes Teilsegment 33 bis 36 aus dem vierten Teil einer räumlich geformten Lavaldüse, was in Fig. 3a mit Bezugszeichen 37 gekennzeichnet ist. Insbesondere ist jeweils ein Viertel eines rotationskegelförmigen Einlaufbereiches 13 und ein Viertel eines rotationskegetförmigen Auslaufbereiches 14 als Teilsegment vorgesehen, mit einer engsten Stelle 11 zur Bildung einer im Querschnitt echten Lavaldüse nach deren Zusammenfügen. An einer Seitenwandung jedes Teilsegments 33 bis 36 ist tangential ein Wandungsabschnitt 38 hochgezogen, der zwei ebene Seitenflächen 39, 40 aufweist, die sich tangential an das Ende der Seitenlinien 41, 42 des Einlaufbereichs 13 sowie des Auslaufbereichs 14 anschließen. Die Höhe h₂ dieser angesetzten seitlichen und ebenen Seitenwandungen 39, 40 bestimmt sich nach dem Maß des zu öffnenden Querschnitts der Lavaldüse.

Wie aus der Darstellung nach den Figuren 3c bis 3f entnehmbar, werden die vier Teilsegmente 33 bis 36 aneinander anschließend ringförmig zusammengesetzt, so daß die vier Teile eine geschlossene rotationssymmetrische Düsenform 37 einer Lavaldüse 1 bilden, wie dies in Fig. 3c dargestellt ist. In dieser geschlossenen zusammengesetzten Form liegt ein rotationssymmetrischer Körper vor, d. h. es handelt sich um eine echte Lavaldüse mit jeweils kreisförmigem Querschnitt insbesondere auch an der engsten Stelle 11. Das hintere Ende der Düsenform ist mit 43 gekennzeichnet.

Zieht man nun die vier Teilsegmente 33 bis 36 in schräger Richtung (45°) entlang den Pfeilen 44 auseinander, so öffnet sich der düsenförmige Querschnitt ähnlich wie ein Drehbank-Backenfutter oder eine Fotolinse durch ein Entlanggleiten der jeweiligen Teile an den ebenen Seitenflächen 39, 40, wobei äußere, ebene angepaßte Außenflächen 45, 46 an den Teilsegmenten 33 bis 36 vorgesehen sind. Zu der rotationssymmetrischen Düsenform 37 fügen sich dann - ähnlich wie in Fig. 1c, 1d - ebene Teilwandungsabschnitte 39, 40 hinzu, die in der Stellung nach Fig. 3e mit einer Breite s₁ bezeichnet sind. Das Öffnen der Lavaldüse, d. h. die Vergrößerung des Querschnitts der Lavaldüse, wird demnach durch Hinzufügen von ebenen Seitenwandungsabschnitten der Seitenwandungen 39, 40 aller Teilsegmente 33 bis 36 erzielt. Die Fig. 3c zeigt die geschlossene Stellung ohne hinzugetretene Wandungsabschnitte. Die Fig. 3d und 3e zeigt eine leicht geöffnete und größer geöffnete Stellung der Düse mit einem vergrößerten Querschnitt aus der strömungsabwärts liegenden Ansicht einer solchen Düse. In Fig. 3f sind die verschiedenen Stellungen aus Fig. 3c - 3e gestrichelt eingezeichnet.

Selbstverständlich können auch mehr als vier Teilsegmente 33 bis 36 zur Bildung der Düsenform verwendet werden, wobei eine erhöhte Anzahl eine stärkere Annäherung an eine Kreisform durch Bildung eines Polygonzuges bewirkt.

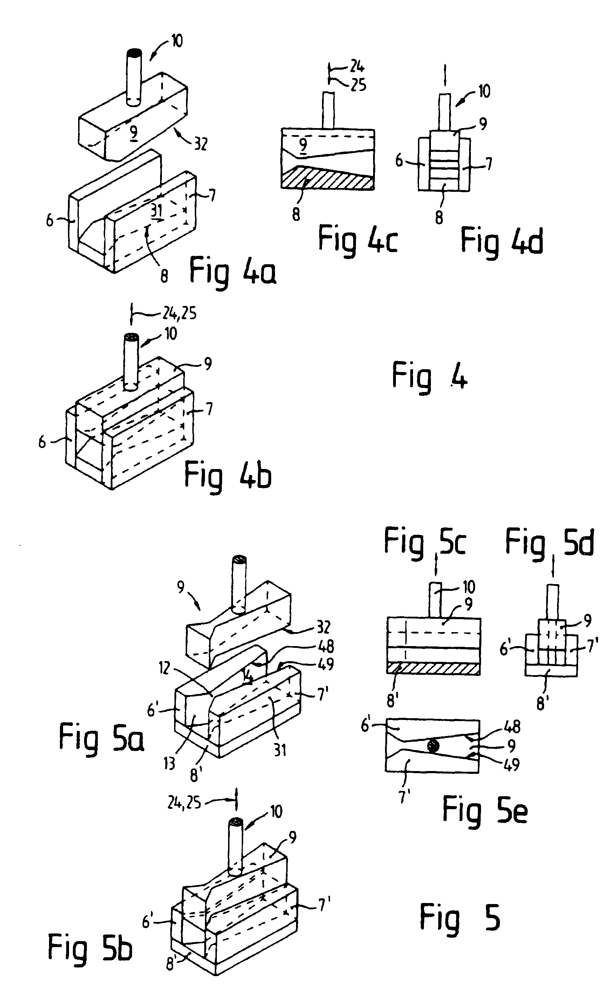

Die Figuren 4 bis 7 zeigen nochmals eine schematische Darstellung verschiedener Querschnittsformen zur Bildung einer lavaldüsen-ähnlichen Düse.

In Figuren 4a bis 4d ist nochmals die Düsenform gemäß Fig. 1a, 1b in prinzipieller Darstellung und Wirkungsweise wiedergegeben. Gleiche Teile sind mit gleichen Bezugszeichen versehen. In diesem Fall handelt es sich wiederum um ebene Düsenwandungen 31, 32 der beiden Düsenhälften 8, 9, wobei die obere Düsenhälfte 9 zwischen geraden seitlichen Wänden 6, 7 mittels einer Stelleinrichtung 10 auf und ab bewegt wird (Pfeile 24, 25).

Die Darstellung nach Fig. 4a zeigt die vom Unterteil abgehobene obere Düsenhälfte, die in Fig. 4b mit dem Unterteil zusammengefahren ist. Fig. 4c zeigt eine Seitenansicht der sich gegenüberstehenden unteren und oberen Düsenhälfte 8, 9 mit dem im Querschnitt lavaldüsen-ähnlichen Querschnitt, Fig. 4d zeigt eine Frontansicht der Düsenanordnung.

In analoger Darstellung zu Fig. 4 ist in Fig. 5 eine alternative Düsenform mit den Einzeldarstellungen nach Fig. 5a bis Fig. 5e wiedergegeben. Anstelle der geraden und ebenen Seitenwänden 6, 7 in Fig. 1a bzw. 1b sowie in Fig. 4 weist das Ausführungsbeispiel nach Fig. 5 gemäß der Explosionsdarstellung in Fig. 5a zwei stationäre Seitenwände 6', 7' auf, die nicht eine ebene Innenfläche, wie beim Ausführungsbeispiel nach Fig. 4 aufweisen, sondern eine nach Art einer Lavaldüse profilierte Innenfläche 48, 49. Diese stationären Flächen 48, 49 entsprechen den ebenen Düsenwandungen 31, 32 im zuvor beschriebenen Ausführungsbeispiel nach Fig. 1a, 1 bzw. Fig. 4 mit dem Unterschied, daß diese in ihrem Abstand zueinander konstant bleiben. Demzufolge bilden bereits die Seitenwandungen 6', 7' eine lavaldüsen-ähnliche Kontur.

Auch die untere feststehende Düsenhälfte 8' kann eine lavaldüsen-ähnliche Kontur 31 aufweisen, wie es dem Ausführungsbeispiel nach Fig. 1a, 1b oder auch nach Fig. 4 entspricht. In vereinfachter Ausführungsform kann die untere Düsenhälfte 8' jedoch auch als ebene Platte ausgebildet sein, da ja bereits die Seitenwandungen 6', 7' lavaldüsen-ähnlich profiliert sind. Eine solche ebene Platte 8' ist als unteres Düsenteil in Fig. 5c im seitlichen Schnitt dargestellt.

Die obere Düsenhälfte 9 weist nun folgerichtig einen in Draufsicht ebenfalls lavaldüsen-ähnlichen Querschnitt auf, der zwischen die düsenhälftenförmigen Seitenwandungen 6', 7' einfährt. In Fig. 5a ist die obere Düsenhälfte 9 separat oberhalb der Seitenwandungen 6', 7' dargestellt. In Fig. 5b wird die in Draufsicht im Querschnitt lavaldüsen-ähnliche Düsenhälfte 9 zwischen die düsenförmig geformten einzelnen Wandungsabschnitte 6', 7' über eine symbolisch dargestellte Stelleinrichtung 10 eingefahren (Pfeil 24, 25). Die untere Fläche der beweglichen oberen Düsenhälfte 9 kann wiederum eben oder auch als düsenförmig profilierte Fläche 32 ausgebildet sein, wie dies zum unteren Düsenabschnitt 8' beschrieben wurde.

In Fig. 5c bis 5e sind die beiden Düsenhälften 8', 9 mit sich gegenüberliegenden ebenen Flächen ausgebildet. Fig. 5e zeigt eine Draufsicht auf die beiden profilierten Seitenwandungsabschnitte 6', 7' mit der von oben eingesetzten ebenso profilierten Düsenhälfte 9.

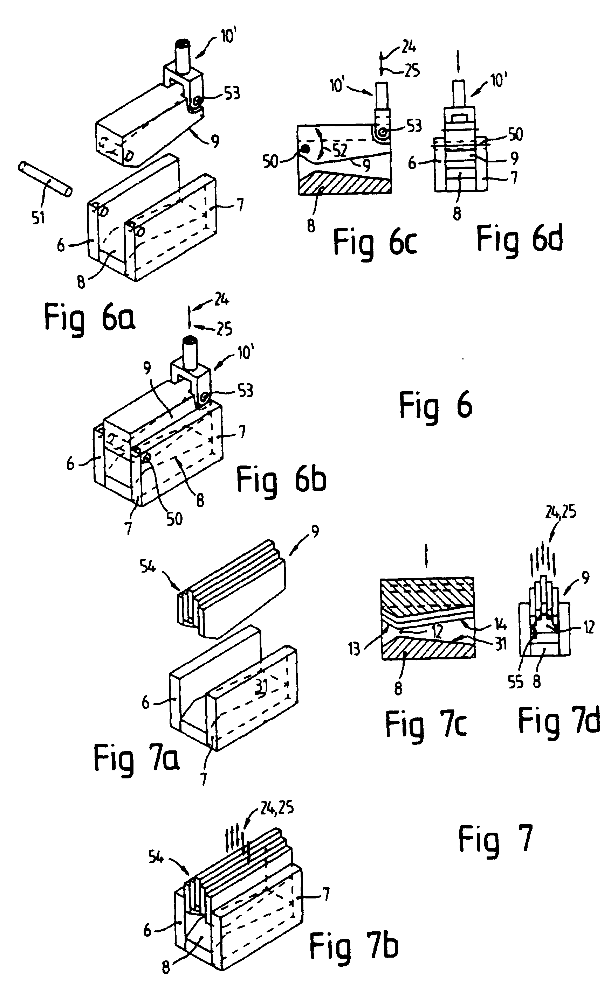

Das Ausführungsbeispiel nach Fig. 6 stellt eine Abwandlung der Ausführungsform nach Fig. 4 dar. Gleiche Teile sind wiederum mit gleichen Bezugszeichen bezeichnet. Anstelle einer linearen Auf- bzw. Abwärtsbewegung der oberen Düsenhälfte 9 in Fig. 4a bzw. 4b mittels einer linearwirkenden Stelleinrichtung 10 erfolgt beim Ausführungsbeispiel nach Fig. 6 eine Schwenkbewegung der oberen Düsenhälfte 9 um eine horizontale Drehachse 50, die durch einen Bolzen 51 gebildet ist, der im vorderen Bereich der oberen Düsenhälfte 9 plaziert ist und zu einer Schwenkbewegung (Pfeil 52) um diese Drehachse führt. Im hinteren Bereich der oberen Düsenhälfte 9 befindet sich wiederum eine Stelleinrichtung 10', die über ein Gelenk 53 an die Düsenhälfte 9 angelenkt ist. Die Auf- und Abwärtsbewegung der Stelleinrichtung 10' ist wiederum durch die Pfeile 24, 25 dargestellt. Anstelle der linearen Auf- und Abwärtsbewegung des Ausführungsbeispiels nach Fig. 4 tritt demnach beim Ausführungsbeispiel nach Fig. 6 eine Schwenkbewegung um die Drehachse 50. Dabei wird der gesamte Querschnitt der lavaldüsen-ähnlichen Vorrichtung geöffnet oder geschlossen.

Im Ausführungsbeispiel nach Fig. 1c bzw. 1f weisen die beiden Düsenhälften 8, 9 sich gegenüberliegende Flächenabschnitte auf, die rotationssymmetrisch ausgebildet sind, so daß sich im zusammengefahrenen Zustand nach Fig. 1c, 1d ein rotationssymmetrischer Düsenquerschnitt ohne seitliche ebene Wandungsabschnitte ergibt. Beim Ausführungsbeispiel nach Fig. 7 wird nun die obere Düsenhälfte 9 aus einer Vielzahl von Segmentscheiben 54 hergestellt, die gegeneinander verschiebbar und in unterschiedlicher Höhe innerhalb des Gehäuses angeordnet werden können. Beispielsweise zeigt Fig. 7a eine obere Düsenhälfte 9, die aus fünf einzelnen Segmentscheiben besteht, die gemäß der Darstellung nach Fig. 7d in Stirnansicht sowie Fig. 7c in Seitenansicht unterschiedlich nach oben bewegt werden. Hieraus kann der innere Durchgangsquerschnitt 12, 13, 14 soweit er die obere Düsenhälfte 9 betrifft, als polygonförmiger Halbkreis 55 ausgebildet werden, der demzufolge in Annäherung der Form des Ausführungsbeispiels nach Fig. 1c bis 1f entspricht. Die Vielzahl der eingezeichneten Pfeile 24, 25 deutet an, daß jede Segmentscheibe unterschiedlich stark gegeneinander verschoben werden kann, um eine beliebige Innenkontur des Durchgangsquerschnitts 12, 13, 14 im Zusammenhang mit der oberen Düsenhälfte 9 zu erzielen. Die untere Düsenhälfte 8 ist dabei gleich ausgebildet wie in den zuvor beschriebenen Ausführungsbeispielen nach Fig. 4 oder 6, d. h. es handelt sich hierbei um eine lavaldüsen-ähnliche Außenkontur mit ebener Düsenwandungsfläche 31. Selbstverständlich könnte man auch die untere Düsenwandungsfläche 31 entsprechend segmentieren und unterschiedlich verschieben, um eine entsprechende Formgebung zu erhalten, wie es zur oberen Düsenhälfte 9 in Fig. 7 beschrieben ist.

Die Erfindung ist nicht auf die beschriebenen und dargestellten Ausführungsbeispiele beschränkt. Sie umfaßt auch vielmehr alle fachmännischen Ausgestaltungen im Rahmen des erfindungsgemäßen Grundgedankens nach Anspruch 1.

## Patentansprüche

1. Vorrichtung zur pneumatischen Förderung von Schüttgütern mit einer lavaldüsenartig ausgebildeten Düse als Regeleinrichtung zur Einstellung einer zum Fördern des Schüttgutes in einem Fluidmassenstrom benötigten Gasmenge, wobei die Düse (1) in einem Gehäuse (5) integriert und in wenigstens zwei Teilsegmente (8, 9, 33 bis 36, 54) aufgeteilt ist, wobei der Düsenquerschnitt durch eine Veränderung des Abstands der Düsenteilsegmente variierbar ist und wobei die Veränderung des Abstandes der Düsenteilsegmente mittels einer druckabhängigen Verstelleinrichtung (26, 27) in Abhängigkeit des Düsenausgangsdruckes pₐ hinter der Düse (1) erfolgt, wobei der Düsenausgangsdruck Pₐ durch eine Veränderung des Fluidmassenstroms erzeugt wird.

2. Vorrichtung nach Anspruch 1, **dadurch gekennzeichnet, daß** die Veränderung des Abstandes der Düsenteilsegmente manuell erfolgt.

3. Vorrichtung nach Anspruch 1, **dadurch gekennzeichnet, daß** das Gehäuse aus zwei parallelen Längsplatten (6, 7) besteht, zwischen welchen eine untere, vorzugsweise feststehende Düsenhälfte (8) mit Düsenquerschnitt (12, 13, 14) und eine obere, beweglich geführte Düsenhälfte (9) mit spiegelbildlichem Düsenquerschnitt angeordnet sind.

4. Vorrichtung nach Anspruch 1, **dadurch gekennzeichnet, daß** eine beweglich geführte Düsenhälfte (9) mit einer Druckregeleinrichtung (10, 27) verbunden ist, wobei der Düsenausgangsdruck Pₐ als Regelgröße dient.

5. Vorrichtung nach Anspruch 1, **dadurch gekennzeichnet, daß** ein konstanter Düsenvordruck Pᵥ vor der Düse (1) mittels eines Druckregelventils einstellbar ist.

6. Vorrichtung nach Anspruch 1, **dadurch gekennzeichnet, daß** eine lavaldüsenartige Düse in wenigstens drei und insbesondere vier Teilsegmente (33 bis 36) aufgeteilt ist, die jeweils aus einem Segmentteil der Formgebung einer Lavaldüse (1) oder dgl. im Längsschnitt ausgebildet sind, wobei jedes Teil insbesondere eine räumlich ausgebildete Düsenteilkontur (37) mit kegelförmigen Wandungsabschnitten (13, 14) und einen tangential fortlaufenden ebenen Wandungsabschnitt (39, 40) aufweist und daß die Teile zur Veränderung des Düsenquerschnitts nach außen oder innen entlang ebenen Flächen (39, 40, 45) verschiebbar sind.

7. Vorrichtung nach Anspruch 1, **dadurch gekennzeichnet, daß** zwei Düsenhälften (8, 9) vorgesehen sind, die in ihrem zusammengeschobenen Zustand wenigstens teilweise einen rotationskegelförmigen Querschnitt bilden.

8. Vorrichtung nach Anspruch 1, **dadurch gekennzeichnet, daß** das Gehäuse zwei feststehende, parallel zueinander angeordnete Seitenwände (6', 7') umfaßt, deren gegenüberliegenden ebenen Innenflächen (48, 49) eine Düsenkontur (12 bis 14) aufweisen und daß eine auf und ab bewegliche obere Düsenhälfte (9) vorgesehen ist, die einen entsprechenden lavaldüsen-ähnlichen Aufbau zur Einpassung zwischen die Seitenwände (6', 7') aufweist.

9. Vorrichtung nach Anspruch 3, **dadurch gekennzeichnet, daß** eine obere bewegliche Düsenhälfte (9) vorgesehen ist, die in ihrem vorderen Bereich eine Schwenkachse (50, 51) und in ihrem hinteren Bereich eine Verstelleinrichtung (10') zur Durchführung einer Schwenkbewegung gegenüber der unteren Düsenhälfte (8) aufweist.

10. Vorrichtung nach Anspruch 7, **dadurch gekennzeichnet, daß** die obere und/oder die untere Düsenhälfte (9, 8) aus mehreren Einzelsegmenten (54) bestehen, die zur Veränderung der Düsenkontur (12, 13, 14) relativ zueinander verschiebbar angeordnet sind.

## Claims

1. Device for the pneumatic conveying of bulk materials, comprising a nozzle basically of the laval type as regulating device for adjusting a gas flow rate required for conveying the bulk material in a fluid mass stream, wherein the nozzle (1) is integrated in a housing (5) and is subdivided into at least two partial segments (8, 9, 33 to 36, 54), wherein the nozzle cross-section is variable by modifying the distance between the nozzle partial segments, and wherein the variation in the distance between the nozzle partial segments takes place by means of a pressure-dependent adjustment device (26, 27) as a function of the nozzle outlet pressure Pₐ behind the nozzle (1), the nozzle outlet pressure Pₐ being created by a change to the fluid mass flow.

2. Device according to Claim 1, **characterized in that** the modification to the distance between the nozzle partial segments is performed manually.

3. Device according to Claim 1, **characterized in that** the housing consists of two parallel longitudinal plates (6, 7), between which are disposed a lower, preferably stationary half-nozzle (8) having a nozzle cross-section (12, 13, 14) and an upper, movably guided half-nozzle (9), having a mirror-image nozzle cross-section.

4. Device according to Claim 1, **characterized in that** a movably guided half-nozzle (9) is connected to a pressure regulating device (10, 27), the nozzle outlet pressure Pₐ serving as control variable.

5. Device according to Claim 1, **characterized in that** a constant nozzle inlet pressure Pᵥ is adjustable upstream of the nozzle (1) by means of a pressure regulating valve.

6. Device according to Claim 1, **characterized in that** a laval-type nozzle is subdivided into at least three and especially four partial segments (33 to 36), each of which is formed of a segment portion having the form of a laval nozzle (1) or the like in longitudinal section, wherein each portion has especially a three-dimensionally constructed nozzle partial contour (37) having conical wall portions (13, 14) and a tangentially continuing, plane wall portion (39, 40), and that the parts are displaceable outwardly or inwardly along plane surfaces (39, 40, 45) for the purpose of varying the nozzle cross-section.

7. Device according to Claim 1, **characterized in that** two half-nozzles (8, 9) are provided, which form, in their brought-together state, at least partly a rotationally conical cross-section.

8. Device according to Claim 1, **characterized in that** the housing comprises two stationary, mutually parallel lateral walls (6', 7'), the mutually opposite plane inner faces (48, 49) of which possess a nozzle contour (12 to 14) and that an upper half-nozzle (9) that is movable up and down is provided, which possesses a corresponding laval-like construction for fitting between the lateral walls (6', 7').

9. Device according to Claim 3, **characterized in that** an upper, movable half-nozzle (9) is provided, which possesses, in its front region, a pivot axis (50, 51) and, in its rear region, an adjusting device (10') for carrying out a pivotal movement relative to the lower half-nozzle (8).

10. Device according to Claim 7, **characterized in that** the upper and/or the lower half-nozzles (9, 8) consist of a plurality of individual segments (54), which are arranged displaceable relative to one another for modifying the nozzle contour (12, 13, 14).

## Revendications

1. Dispositif pour le transport pneumatique de matières en vrac, comportant une buse réalisée sous forme de buse de Laval, comme dispositif de réglage pour régler une quantité de gaz nécessaire pour transporter la matière en vrac dans un courant massique de fluide, la buse (1) étant intégrée dans un boîtier (5) et étant partagée en au moins deux segments partiels (8,9,33 à 36,54), la section transversale de la buse pouvant être modifiée par une variation de la distance des segments partiels de buse et la variation de la distance des segments partiels de buse étant effectuée au moyen d'un dispositif de réglage (26,27) dépendant de la pression, de façon dépendant de la pression de sortie Pₐ de la buse derrière la buse (1), la pression de sortie de buse Pₐ étant engendrée par une variation du courant massique de fluide.

2. Dispositif selon la revendication 1
**caractérisé en ce que** la variation de la distance des segments partiels de buse est effectuée manuellement.

3. Dispositif selon la revendication 1,
**caractérisé en ce que** le boîtier est constitué de deux plaques longitudinales parallèles (6,7), entre lesquelles sont agencées une moitié inférieure de buse (8), avantageusement fixe, ayant une section transversale de buse (12,13,14) et une moitié supérieure de buse (9), guidée de façon mobile, ayant une section transversale de buse symétrique.

4. Dispositif selon la revendication 1,
**caractérisé en ce qu'**une moitié de buse (9) guidée de façon mobile est reliée à un dispositif de réglage de pression (10,27), la pression de sortie de buse Pₐ servant de grandeur de réglage.

5. Dispositif selon la revendication 1,
**caractérisé en ce qu'**une pression d'admission de buse constante Pᵥ avant la buse (1) peut être réglée au moyen d'une vanne de régulation de pression.

6. Dispositif selon la revendication 1,
**caractérisé en ce qu'**une buse du type Laval est partagée en au moins trois et, en particulier, quatre segments partiels (33 à 36), qui, à chaque fois, sont réalisés à partir d'une partie de segment de la structure d'une buse Laval (1) ou analogue en coupe longitudinale, chaque partie présentant en particulier un contour partiel de buse (37) réalisé de façon spatiale ayant des tronçons de paroi de forme conique (13,14) et un tronçon de paroi plan (39,40) tangentiellement continu, et **en ce que** les parties sont déplaçables, pour modifier la section transversale de la buse, vers l'extérieur ou vers l'intérieur le long de surfaces planes (39,40,45).

7. Dispositif selon la revendication 1,
**caractérisé en ce que** deux moitiés de buse (8,9) sont prévues, qui forment, dans leur état assemblé, au moins partiellement, une section transversale conique de révolution.

8. Dispositif selon la revendication 1,
**caractérisé en ce que** le boîtier comporte deux parois latérales (6',7') fixes, agencées parallèlement l'une à l'autre, dont les surfaces internes opposées planes (48,49) présentent un contour de buse (12 à 14), et **en ce qu'**une moitié de buse supérieure (9) mobile en montant et en descendant est prévue, qui présente une structure correspondante analogue à une buse Laval pour l'adaptation entre les parois latérales (6',7').

9. Dispositif selon la revendication 3,
**caractérisé en ce qu'**une moitié de buse supérieure mobile (9) est prévue qui présente, dans la zone avant, un axe de pivotement (50,51) et, dans sa zone arrière, un dispositif de réglage (10') pour effectuer un mouvement pivotant par rapport à la moitié inférieure de buse (8)

10. Dispositif selon la revendication 7,
**caractérisé en ce que** la moitié supérieure de buse et/ou la moitié inférieure de buse (9,8) sont constituées de plusieurs segments individuels (54) qui sont agencés de façon déplaçable les uns par rapport aux autres pour modifier le contour de la buse (12,13,14).
